# EUROPÄISCHE PATENTSCHRIFT

(11) **EP 0 652 424 B1**
(45) Veröffentlichungstag und Bekanntmachung des Hinweises auf die Patenterteilung: **25.03.1998**
(21) Anmeldenummer: 94114143.4
(22) Anmeldetag: 07.09.1994
(51) Int. Cl.: G01L 5/22, G01L 3/10

(54) **Lenkmomentensensor zur Erfassung des an der Eingangswelle eines Kraftfahrzeug-Lenkgetriebes wirksamen Lenkmoments**
Steering torque sensor for detecting the effective steering torque in the input shaft of a vehicle steering gear
Capteur du couple de guidage pour la détection du couple de guidage effectif dans l'arbre d'entrée de l'engrenage de direction d'un véhicule

(30) Priorität: 05.11.1993 DE 4337734
(43) Veröffentlichungstag der Anmeldung: 10.05.1995
(73) Patentinhaber: Volkswagen Aktiengesellschaft, 38436 Wolfsburg (DE)
(72) Erfinder: Leineweber, Günter, D-38518 Gifhorn (DE); Warnecke, Rolf, D-38518 Gifhorn (DE)

(56) Entgegenhaltungen:
- DE-A- 3 737 007
- DE-U- 9 100 654
- PATENT ABSTRACTS OF JAPAN vol. 10 no. 215 (P-481) [2271] ,26.Juli 1986 & JP-A-61 054419 (JIDOSHA KIKI CO LTD) 18.März 1986,

## Beschreibung

Die Erfindung betrifft einen Lenkmomentensensor zur Erfassung des an der Eingangswelle eines Kraftfahrzeug-Lenkgetriebes wirksamen Lenkmoments.

Beim Betrieb eines Kraftfahrzeugs kann es aus vielerlei Gründen erforderlich sein zu wissen, ob und wenn ja, mit welcher Drehrichtung jeweils gerade ein Lenkmoment wirksam ist.

Solche Informationen werden beispielsweise häufig im Zusammenhang mit Servolenkeinrichtungen benötigt, um die Servounterstützung zu aktivieren und/oder zu steuern oder zu regeln.

Benötigt werde solche Informationen gegebenenfalls auch im Zusammenhang mit Fahrdynamikregelungen, wie sie zunehmend ins Gespräch kommen.

Bekannt sind beispielsweise Kraftfahrzeug-Servolenkeinrichtungen (z. B. DE 32 36 080-A1, DE 36 03 065-C2), bei denen zur Erfassung von Lenkmomenten im Zuge der das Lenkrad mit der Eingangswelle des Lenkgetriebes verbindenden Lenkwelle bzw. -spindel Dehnmeßstreifen angeordnet sind, welche elektrisch in üblicher Weise in einer Meßbrückenschaltung nach Art einer Wheatstone-Brücke liegen. Räumlich angeordnet sind sie dabei an einem im Zuge der Lenkwellenanordnung liegenden Torsionsstab, d. h. in einem Lenkwellenbereich, in dem unter der Wirkung von Lenkmomenten jeweils eine spürbare Torsionsverformung stattfindet.

Anordnungen mit Dehnmeßstreifen sind vergleichsweise teuer, da wegen der jeweils nur niedrigen Widerstandsänderungen Meßbrückenschaltungen erforderlich werden, um zu auswertbaren Meßspannungen zu gelangen. EMV(Elektromagnetische Verträglichkeit)-Probleme können hierbei nicht ausgeschlossen werden. Im übrigen bereitet auch das Anbringen der Dehnmeßstreifen gewisse Schwierigkeiten. Um auswertbare Ergebnisse zu erzielen, müssen sie sehr sorgfältig und dauerfest aufgeklebt werden, was unter Umständen recht teuer ist.

Bekannt ist es auch (z. B. DE 33 04 917-A1), die unter der Einwirkung eines Lenkmoments stattfindende Relativverdrehung zweier durch ein Torsionsfederelement drehmomentenmäßig miteinander gekoppelter Lenkwellenteile für eine lenkmomentenabhängige Axialverschiebung einer eine Kurzschlußwicklung tragenden Steuerhülse auszunutzen, wobei die Kurzschlußwicklung mit zwei von einer Wechselspannung gespeisten ortsfesten Spulen zusammenwirkt und bei ihrer Axialverschiebung durch Induktion jeweils eine drehmomentenabhängige Ausgangsspannung liefern soll. Diese bekannte Anordnung erscheint konstruktiv und funktionell vergleichsweise aufwendig.

Bekannt ist auch eine Kraftfahrzeug-Servolenkeinrichtung (z. B. EP 0 287 227-B1) in Form einer hydraulisch unterstützten zahnstangenlenkung, bei der das mit der Zahnstange zusammenwirkende Zahnritzel derart gelagert ist, daß es sich lenkmomentenabhängig räumlich verschieben kann und dadurch einen mit ihm gekoppelten Hebel auslenkt, der seinerseits nicht nur das hydraulische Lenkventil der Servolenkeinrichtung betätigt, sondern gleichzeitig durch seine Schwenkbewegung je nach Schwenkrichtung auch jeweils einen von zwei elektrischen Mikroschaltern betätigt und so bedarfsorientiert die elektrohydraulische Energieversorgung (Pumpenantrieb) ein- und ausschaltet. Diese bekannte Anordnung erfordert eine spezielle Ausbildung der Lenkeinrichtung und ist sehr toleranzabhängig. Es dürfte Schwierigkeiten bereiten, jeweils mit genügender Genauigkeit den für die Mikroschalter erforderlichen benötigten Schaltweg vorzuhalten.

Vor diesem Hintergrund liegt der Erfindung die Aufgabe zugrunde, einen konstruktiv vergleichsweise einfachen Lenkmomentensensor zu schaffen, der gegebenenfalls auch noch nachträglich ohne besondere Schwierigkeit und ohne größere konstruktive Änderungen in an sich bereits bestehende Lenkeinrichtungen eingefügt werden kann und an der Eingangswelle des Lenkgetriebes wirksame Lenkmomente zuverlässig und ausreichend genau sensiert.

Diese Aufgabe wird erfindungsgemäß durch die Merkmale des Patentanspruchs 1 gelöst.

Vorteilhafte Ausgestaltungen und Weiterbildungen der Erfindung sind in den abhängigen Ansprüchen angegeben.

Anhand eines in der Zeichnungen dargestellten Ausführungsbeispiels wird die Erfindung nachstehend näher erläutert.

In der Zeichnung zeigen
- Figur 1: einen Längsschnitt durch einen Lenkmomentensensor gemäß der Erfindung und
- Figur 2: einen Querschnitt durch diesen Lenkmomentensensor entlang der in Fig. 1 mit II bezifferten Schnittführung.

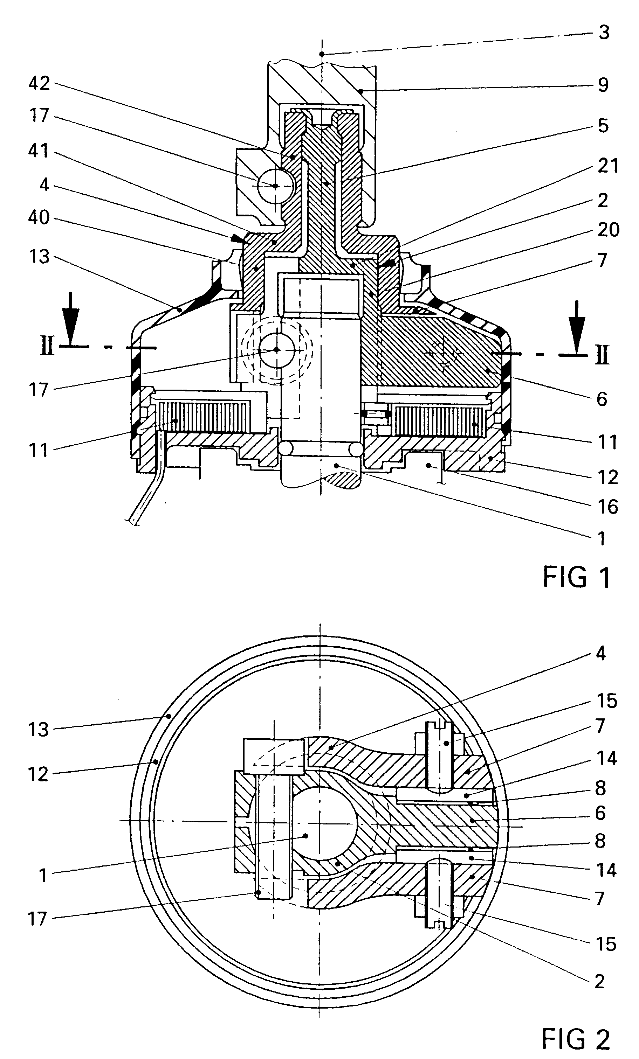

Fig. 1 zeigt den Längsschnitt durch einen erfindungsgemäßen Lenkmomentensensor, der im Zuge des die Drehbewegungen des nicht weiter dargestellten Lenkrades auf das im einzelnen ebenfalls nicht weiter dargestellte Kfz-Lenkgetriebe übertragenden Kraftübertragungsstranges angeordnet ist, und zwar an der Koppelstelle zwischen der Eingangswelle 1 des Lenkgetriebes und dem unteren Ende der vom Lenkrad betätigten Lenkwelle bzw. -spindel 9.

Um welche Art von Lenkgetriebe es sich hierbei handelt, ist für die Erfindung unbedeutend. So kann die dargestellte Eingangswelle 1 genausogut die Ritzelwelle eines mit der Zahnstange einer Zahnstangenlenkung kämmenden Ritzels sein wie auch die Eingangswelle einer bekannten Kugelumlauflenkung o. ä.

Der Lenkmomentensensor zur Erfassung des an der Eingangswelle 1 wirksamen Lenkmoments besteht im wesentlichen aus einem auf das freie Ende 10 der Eingangswelle 1 koaxial aufsteckbaren und mit diesem drehmomentenschlüssig verbindbaren ersten Bauteil 2 sowie aus einem zu diesem ersten Bauteil 2 koaxialen zweiten Bauteil 4, welches seinerseits einerseits über einen tordierbaren Drehstab 5 - oder über eine damit vergleichbare Federvorrichtung - drehmomentenübertragend mit dem ersten Bauteil 2 gekoppelt ist und andererseits drehmomentenschlüssig mit der vom Lenkrad betätigbaren Lenkwelle 9 verbunden ist, wozu - genauso wie für die drehmomentenschlüssige Verbindung zwischen erstem Bauteil 2 und Eingangswelle 1 - eine übliche Klemmschraube 17 vorgesehen ist.

Das erste Bauteil 2 besitzt eine zumindest annähernde Glocken- oder Tassenform, deren Glocken- oder Tassenboden mit 21 beziffert ist. In seinem lenkgetriebeseitigen - in der Zeichnung unteren - Tassenrandbereich ist ein fahnenartiger erster Fortsatz 6 angeformt, der etwa radial von der mit der Eingangswelle 1 gemeinsamen Drehachse 3 des ersten Bauteils 2 wegweist.

Auch das zweite Bauteil 4 besitzt eine zumindest annähernde Glocken- oder Tassenform, mit der sie das koaxiale erste Bauteil 2 zumindest annähernd über dessen ganze axiale Erstreckung sowie zumindest zum Teil konzentrisch umschließt.

In seinem lenkgetriebeseitigen - in Fig. 1 unten liegenden - Tassenrandbereich sind zwei etwa parallele, von der gemeinsamen Drehachse 3 ebenfalls etwa radial wegweisende fahnenartige zweite Fortsätze 7 angeformt, die den ersten Fortsatz 6 des ersten Bauteils 2 zwischen sich aufnehmen, wie aus Fig. 2 gut zu erkennen ist.

Jeweils zwischen dem ersten Fortsatz 6 des ersten Bauteils 2 und den benachbarten beiden zweiten Fortsätzen 7 des zweiten Bauteils 4 sind Drucksensoren 8 zumindest annähernd spielfrei angeordnet.

Wenn infolge der Betätigung des Lenkrades oder als Reaktion auf an den lenkbaren Rädern angreifende entsprechende Kräfte im das Lenkrad mit der Eingangswelle 1 verbindenden Kraftübertragungsstrang Lenkmomente wirksam werden, dann werden auf die zwischen den fahnenartigen Fortsätzen 6/7 spielfrei angeordneten Drucksensoren 8 lenkmomentenproportionale Kräfte in die eine bzw. in die andere Richtung ausgeübt, da die drehmomentenschlüssige Kopplung zwischen dem ersten und dem zweiten Bauteil 2 bzw. 4 nicht starr, sondern mittels des tordierbaren Drehstabs 5 erfolgt.

Wenn es im konkreten Einsatzfalle lediglich darauf ankommt festzustellen, ob überhaupt ein Lenkmoment wirksam ist und wenn ja, in welche Drehrichtung dieses wirkt, dann können zwischen den fahnenartigen Fortsätzen 6/7 zur entsprechenden Signalgebung übliche elektrische Mikroschalter eingesetzt werden.

Von Vorteil ist es jedoch, als Drucksensoren 8 jeweils niederohmige kraftabhängige elektrische Widerstände einzusetzen, wie sie in jüngster Zeit in Form von aufklebbaren Folien auf den Markt gekommen sind.

Der Einsatz solcher niederohmigen kraftabhängigen elektrischen Widerstände ist mit mehreren wesentlichen Vorteilen verbunden: Zum einen wird durch sie nicht nur die bloße Existenz und die Drehrichtung eventuell wirksamer Lenkmomente erfaßt, sondern auch deren Größe sensiert, wodurch eine einfache Möglichkeit geschaffen wird, gegebenenfalls mit Hilfe geeigneter Regeleinrichtungen auch in Abhängigkeit von der jeweiligen Größe des wirksamen Lenkmoments bestimmte Regeleingriffe vorzunehmen. Mit Hilfe einer solchen Anordnung ist es also nicht nur möglich, beim sensierten Auftreten eines Lenkmoments die z. B. elektrohydraulische Versorgung einer hydraulischen Servolenkeinrichtung zu aktivieren, sondern es ist in einfacher Weise auch möglich, diese jeweils erst in Abhängigkeit von einer bestimmten Größe des Moments zuzuschalten bzw. wieder abzuschalten und erforderlichenfalls die jeweilige Lenkunterstützung auch momentenabhängig zu steuern.
Von Vorteil ist es auch, daß bei Einsatz dieser vergleichsweise niederohmigen Widerstände (in der Größenordnung von z. B. etwa 10 kΩ) keinerlei EMV(Elektromagnetische Verträglichkeit)-Probleme zu erwarten sind.
Schließlich sind derartige in Form von Folien vorliegende kraftabhängige elektrische Widerstände auch konstruktiv besonders leicht zu handhaben, z. B. dadurch, daß sie z. B. wie im dargestellten Ausführungsbeispiel - quasi als vorgefertigte Baueinheit - auf geeignete relativ kleinformatige Druckplatten 14 aufgeklebt sind, die dann ihrerseits spielfrei jeweils in den zwischen dem ersten Fortsatz 6 und den beiden benachbarten Fortsätzen 7 gebildeten Zwischenräumen eingebaut und gehaltert werden, z. B. mit Hilfe von Justierschrauben 15.

Im Ausführungsbeispiel ist der lenkwellenseitige - in Fig. 1 also oben liegende - bodennahe Glocken- bzw. Tassenbereich 20 mit einer kreiszylindrischen Außenkontur ausgestattet, die in einfacher Weise als Gleitlagerführung für das konzentrisch angeordnete zweite Bauteil 4 dient, welches zu diesem Zwecke seinerseits in seinem lenkwellenseitigen bodennahen Glocken- oder Tassenbereich 40 mit einer entsprechenden kreiszylindrischen Innenkontur versehen ist, die mit der vorerwähnten kreiszylindrischen Außenkontur des ersten Bauteils 2 gleitend zusammenwirkt.

Im dargestellten Ausführungsbeispiel ist zur drehmomentenübertragenden Kopplung der beiden Bauteile 2, 4 ein tordierbarer Drehstab 5 vorgesehen, der mittig und koaxial zur gemeinsamen Drehachse 3 am Glocken- oder Tassenboden 21 des ersten Bauteils 2 angreift und sich in Richtung Lenkwelle 9 erstreckt. Im dargestellten Ausführungsbeispiel ist er einstückig am ersten Bauteil 2 angeformt. Grundsätzlich könnte er aber auch natürlich als separater Drehstab ausgebildet sein, der dann mit seinem unteren Ende formschlüssig, nämlich drehmomentenschlüssig an das erste Bauteil 2 anzukoppeln wäre, beispielsweise dadurch, daß er mit einem nichtkreiszylindrisch ausgebildeten freien Ende in eine damit korrespondierende nichtkreiszylindrisch ausgebildete Ausnehmung des Glocken- oder Tassenbodens 21 eingreift.

Zur Aufnahme des Drehstabs 5 ist am zweiten Bauteil 4 zentrisch im Glocken- oder Tassenboden 41 ein sich in Richtung Lenkwelle 9 erstreckender hohlzylindrischer Axialfortsatz 42 angeordnet, in den der Drehstab 5 axial eingreift und dort mit seinem - oberen - freien Ende in üblicher Weise drehmomentenschlüssig angekoppelt ist.

Am Axialfortsatz 42 wird dann drehmomentenschlüssig die vom Lenkrad betätigte Lenkwelle 9 angekoppelt.

Im dargestellten Ausführungsbeispiel entspricht der Axialfortsatz 42 in seinen äußeren Abmessungen und seiner äußeren Gestaltung etwa der gewohnten Ausbildung des freien Endes einer Lenkgetriebe-Eingangswelle, wie in Fig. 1 deutlich zu erkennen ist. Die drehmomentenfeste Ankopplung des unteren Lenkwellenendes an das zweite Bauteil 4, nämlich an dessen Axialfortsatz 42 kann daher genau in der Weise erfolgen, wie dies üblicherweise bei der Kopplung zwischen Lenkgetriebe-Eingangswelle und Lenkwelle der Fall ist.

Um die unter der Einwirkung von Lenkmomenten an den Drucksensoren 8 entstehenden "Veränderungen", d. h. letztlich die von den Drucksensoren erzeugten Signale, abzunehmen und einer wie auch immer gearteten Auswerte- und/oder Regeleinrichtung zuzuführen, können - wie im dargestellten Ausführungsbeispiel - in vorteilhafter Weise bekannte elektrisch leitende Wickelfedern 11 eingesetzt werden, die in der Lage sind, ohne jede Schwierigkeit die betriebsmäßig üblicherweise in beiden Drehrichtungen auftretenden mehreren Lenkwellenumdrehungen zu überbrücken. Derartige elektrisch leitende Wickelfedern werden beispielsweise verwendet, um einen im Lenkrad eingebauten Airbag im Kollisionsfalle zu aktivieren.

Zur räumlichen Lagerung der jeweils einenends elektrisch mit den Drucksensoren verbundenen und anderenends nach außen herausgeführten Wickelfedern 11 ist eine Gehäuseschale 12 vorgesehen, die ihrerseits dann an dem nicht weiter dargestellten Lenkgetriebegehäuse 16 befestigt wird.

Um die inneren Teile, insbesondere die Drucksensoren sowie die Wickelfedern des Lenkmomentensensors gegen äußere Verschmutzung zu schützen, wird vorzugsweise eine Dichtungsstulpe 13 vorgesehen, die mit ihrem - oberen - kreiszylindrischen Umfangsbereich vergleichsweise geringen Durchmessers an einem entsprechenden kreiszylindrischen Umfangsbereich des zweiten Bauteils 4 dichtend, aber vorzugsweise gleitend anliegt und mit ihrem - unteren - anderen Ende dichtend und vorzugsweise drehfest an der Gehäuseschale 12 befestigt ist.

Der erfindungsgemäße Lenkmomentensensor stellt ein konstruktiv einfaches preiswertes Bauteil dar, das sich durch seine relativ kurze Bauweise auszeichnet und sich besonders gut zum Schalten und/oder Regeln bzw. Aussteuern der elektrohydraulischen Energieversorgung einer hydraulischen Servolenkeinrichtung eignet.

Bei den heutigen Serienlenkhilfesystemen wird im allgemeinen auch ohne Bedarf einer Lenkunterstützung ständig Energie verbraucht, um das Lenkhilfesystem in Bereitschaft zu halten. Wenn dieser Energiebedarf einer elektrohydraulischen Servolenkeinrichtung dagegen jeweils nur bedarfsorientiert und in der tatsächlich benötigten Höhe zur Verfügung gestellt wird, läßt sich der mittlere Energiebedarf einer Servolenkeinrichtung drastisch verringern. Mit dem erfindungsgemäßen Lenkmomentensensor steht eine für eine derartige bedarfsgerechte Steuerung und Regelung einer elektrohydraulischen Servolenkeinrichtung besonders geeignete Anordnung zur Verfügung, die sich u. a. auch dadurch auszeichnet, daß sie normalerweise ohne irgendwelche Schwierigkeiten auf die Eingangswelle üblicher Serienlenkgetriebe aufgesetzt werden kann.

## Patentansprüche

1. Lenkmomentensensor zur Erfassung des an der Eingangswelle (1) eines Kraftfahrzeug-Lenkgetriebes wirksamen Lenkmoments, enthaltend
- ein auf das freie Ende (10) der Eingangswelle (1) koaxial aufsteckbares und mit diesem drehmomentenschlüssig verbindbares erstes Bauteil (2) mit einem von seiner mit der Eingangswelle (1) gemeinsamen Drehachse (3) etwa radial wegweisenden fahnenartigen ersten Fortsatz (6) sowie
- ein zum ersten Bauteil (2) koaxiales und dieses zumindest zum Teil konzentrisch umschließendes zweites Bauteil (4) mit zwei etwa parallelen, von der gemeinsamen Drehachse (3) ebenfalls etwa radial wegweisenden und den ersten Fortsatz (6) zwischen sich aufnehmenden fahnenartigen zweiten Fortsätzen (7),
- wobei jeweils zwischen dem ersten Fortsatz (6) des ersten Bauteils (2) und den benachbarten beiden zweiten Fortsätzen (7) des zweiten Bauteils (4) Drucksensoren (8) oder Mikroschalter zumindest annähernd spielfrei angeordnet sind und
- wobei das zweite Bauteil (4) einerseits drehmomentenschlüssig mit einer vom Lenkrad des Kraftfahrzeugs betätigbaren Lenkwelle (9) verbindbar ist und andererseits über einen tordierbaren Drehstab (5) oder eine damit vergleichbare Federvorrichtung drehmomentenübertragend mit dem ersten Bauteil (2) gekoppelt ist.

2. Lenkmomentensensor nach Anspruch 1, wobei
das erste Bauteil (2) eine zumindest annähernde Glocken- oder Tassenform besitzt und sein erster Fortsatz (6) in seinem lenkgetriebeseitigen Tassenrandbereich angeordnet ist, und daß sein lenkwellenseitiger bodennaher Glocken- bzw. Tassenbereich (20) eine als Gleitlagerführung für das zweite Bauteil (4) dienende kreiszylindrische Außenkontur aufweist.

3. Lenkmomentensensor nach Anspruch 2, wobei
der tordierbare Drehstab (5) mittig und koaxial zur gemeinsamen Drehachse (3) am Glocken- oder Tassenboden (21) des ersten Bauteils (2) angreift und sich in Richtung Lenkwelle (9) erstreckt.

4. Lenkmomentensensor nach Anspruch 3, wobei
der Drehstab (5) einstückig am ersten Bauteil (2) angeformt ist.

5. Lenkmomentensensor nach einem der Ansprüche 2 bis 4, wobei
das zweite Bauteil (4) ebenfalls eine zumindest annähernde Glocken- oder Tassenform besitzt und das tassenförmige erste Bauteil (2) zumindest annähernd über dessen ganze axiale Erstreckung umschließt, wobei seine beiden fahnenartigen zweiten Fortsätze (7) in seinem lenkgetriebeseitigen Tassenrandbereich angeordnet sind und sein lenkwellenseitiger bodennaher Glocken- oder Tassenbereich (40) eine mit dem kreiszylindrischen Glocken- oder Tassenbereich (20) des ersten Bauteils (2) gleitend zusammenwirkende kreiszylindrische Innenkontur aufweist.

6. Lenkmomentensensor nach einem der Ansprüche 3 bis 5, wobei
der Drehstab (5) axial in einen zentrisch im Glocken- oder Tassenboden (41) des zweiten Bauteils (4) angeordneten und sich in Richtung Lenkwelle (9) erstreckenden hohlzylindrischen Axialfortsatz (42) eingreift und dort mit seinem freien Ende drehmomentenschlüssig angekoppelt ist.

7. Lenkmomentensensor nach einem der Ansprüche 1 bis 6, wobei
Mikroschalter angeordnet sind.

8. Lenkmomentensensor nach einem der Ansprüche 1 bis 6, wobei
die Drucksensoren (8) als kraftabhängige niederohmige elektrische Widerstände ausgebildet sind.

9. Lenkmomentensensor nach Anspruch 8, wobei
die kraftabhängigen elektrischen Widerstände in Form von Folien auf Druckplatten (14) befestigt, vorzugsweise aufgeklebt sind, die jeweils zwischen dem ersten Fortsatz (6) und den benachbarten beiden zweiten Fortsätzen (7) angeordnet und ihrerseits mittels in den zweiten Fortsätzen (7) angeordneten Justierschrauben (15) fixiert und spielfrei gehaltert sind.

10. Lenkmomentensensor nach einem der Ansprüche 1 bis 9, wobei
zur Abnahme der von den Drucksensoren (8) oder Mikroschaltern erzeugten Signale in beide Drehrichtungen jeweils mehrere Lenkwellenumdrehungen überbrückende elektrisch leitende Wickelfedern (11) vorgesehen sind.

11. Lenkmomentensensor nach Anspruch 10, wobei
eine drehfest mit dem Lenkgetriebegehäuse (16) verbindbare Gehäuseschale (12) zur Halterung der jeweils einen-ends mit den Drucksensoren (8) oder Mikroschaltern verbundenen und anderenends nach außen herausgeführten Wickelfedern (11) vorhanden ist.

12. Lenkmomentensensor nach Anspruch 11, wobei
eine einenends dichtend und vorzugsweise drehfest an der Gehäuseschale (12) und anderenends dichtend und vorzugsweise gleitend an einem kreiszylindrischen Umfangsbereich des zweiten Bauteils (4) anliegende Dichtungsstulpe (13) vorhanden ist.

## Claims

1. Steering torque sensor for the purpose of detecting the effective steering torque on the input shaft (1) of a motor vehicle steering gear, containing
a first component (2), which can be attached in a coaxial manner to the free end (10) of the input shaft (1) and connected thereto in a torque-locking manner, comprising one lug-like first extension (6) which points away in an approximately radial manner from its rotational axis (3) common to the input shaft (1), and containing
a second component (4) coaxial to the first component (2) and surrounding same at least partially in a concentric manner and comprising two approximately parailel, lug-like second extensions (7) which also point away from the common rotational axis (3) in an approximately radial manner and receive between them the first extension (6),
wherein pressure sensors (8) or micro-switches are disposed in an at least approximately play-free manner in each case between the first extension (6) of the first component (2) and the adjacent two second extensions (7) of the second component (4), and
wherein the second component (4) can be connected at one end in a torque-locking manner to a steering shaft (9), which can be actuated by the steering wheel of the motor vehicle, and said second component is coupled at the other end to the first component (2) by way of a twistable rotatable rod (5) or a comparable spring device in such a manner so as to transmit torque.

2. Steering torque sensor according to claim 1, wherein the first component (2) has an at least approximately bell or cup shape and its first extension (6) is disposed in its cup edge region on the steering gear side, and that its steering shaft-side bell or cup region (20) in the proximity of the base comprises a circular cylindrical outer contour which serves as a sliding bearing guide for the second component (4).

3. Steering torque sensor according to claim 2, wherein the twistable rotatable rod (5) engages the bell or cup base (21) of the first component (2) centrally and coaxially with respect to the common rotational axis (3) and extends in the direction of the steering shaft (9).

4. Steering torque sensor according to claim 3, wherein the rotatable rod (5) is integrally formed as one piece on the first component (2).

5. Steering torque sensor according to any one of the claims 2 to 4, wherein the second component (4) likewise has an at least approximately bell or cup shape and surrounds the cup-shaped first component (2) at least approximately over the entire axial extension thereof, wherein its two lug-like second extensions (7) are disposed in its steering gear-side cup edge region and its steering shaft-side bell or cup region (40) in the proximity of the base comprises a circular cylindrical inner contour which cooperates in a sliding manner with the circular cylindrical bell or cup region (20) of the first component (2).

6. Steering torque sensor according to any one of the claims 3 to 5, wherein the rotatable rod (5) engages in an axial manner into a hollow cylindrical axial extension (42) which is disposed in a centric manner in the bell or cup base (41) of the second component (4) and extends in the direction of the steering shaft (9) and is coupled at this site to the free end of said axial extension in a torque-locking manner.

7. Steering torque sensor according to any one of the claims 1 to 6, wherein micro-switches are provided.

8. Steering torque sensor according to any one of the claims 1 to 6, wherein the pressure sensors (8) are formed as force-dependent, low-ohmic electric resistors.

9. Steering torque sensor according to claim 8, wherein the force-dependent electric resistors in the form of sheets are attached, preferably adhered, to pressure plates (14) which are disposed in each case between the first extension (6) and the adjacent two second extensions (7) and which pressure plates are for their part fixed by means of adjusting screws (15) disposed in the second extensions (7) and are mounted in a play-free manner.

10. Steering torque sensor according to any one of the claims 1 to 9, wherein for the purpose of accepting the signals produced by the pressure sensors (8) or micro-switches, electrically conductive volute springs (11) are provided which in each case bridge in both rotational directions a plurality of steering shaft rotations.

11. Steering torque sensor according to claim 10, wherein a housing shell (12) which can be connected in a non-rotatable manner to the steering gear housing (16) is provided for the purpose of mounting of the volute springs (11) which in each case are connected at one end to the pressure sensors (8) or micro-switches and at the other end are guided outwards.

12. Steering torque sensor according to claim 11, wherein a sealing sleeve (13) is provided which at one end lies against the housing shell (12) in a sealing and preferably non-rotatable manner and at the other end lies against a circular cylindrical peripheral region of the second component (4) in a sealing and preferably sliding manner.

## Revendications

1. Détecteur de couple de braquage servant à détecter le couple de braquage qui s'exerce sur l'arbre d'entrée (1) d'un boîtier de direction de véhicule à moteur, contenant
- une première pièce constitutive (2), qui peut être enfilée sur l'extrémité libre (10) de l'arbre d'entrée (1) de façon coaxiale et qui peut être reliée à celle-ci de façon dynamométrique, avec un premier prolongement (6) en forme de queue, qui s'écarte à peu près radialement de son axe de rotation (3) commun à l'arbre d'entrée (1) et
- une deuxième pièce constitutive (4), coaxiale à la première pièce constitutive (2), et qui entoure celle-ci au moins en partie de façon concentrique, avec deux seconds prolongements à peu près parallèles (7) en forme de queues, qui s'écartent également à peu près radialement de l'axe de rotation commun (3) et qui reçoivent entre eux le premier prolongement (6),
- des capteurs de pression (8) ou des micro-interrupteurs étant disposés au moins approximativement sans jeu respectivement entre le premier prolongement (6) de la première pièce constitutive (2) et les deux seconds prolongements voisins (7) de la deuxième pièce constitutive (4) et
- la deuxième pièce constitutive (4) pouvant être reliée d'une part de façon dynamométrique à un arbre de direction (9), qui peut être actionné par le volant de direction du véhicule à moteur et, d'autre part, étant accouplée à la première pièce constitutive (2) au moyen d'une barre de torsion (5), ou d'un dispositif élastique qui lui est comparable, en transmettant le couple de rotation.

2. Détecteur de couple de braquage, dans lequel la première pièce constitutive (2) présente une forme au moins approximative de cloche ou de tasse et son premier prolongement (6) est disposé dans la zone du bord de la tasse située du côté du boîtier de direction, et dans lequel sa zone (20) en forme de cloche ou de tasse proche du fond, située du côté du boîtier de direction, présente un contour extérieur cylindrique à base circulaire, qui sert de guide de glissement pour la deuxième pièce constitutive (4).

3. Détecteur de couple de braquage selon la revendication 2, dans lequel la barre de torsion (5) vient en prise au milieu et de façon coaxiale à l'axe de rotation commun (3) sur le fond de la cloche ou de la tasse (21) de la première pièce constitutive (2) et s'étend en direction de l'arbre de direction (9).

4. Détecteur de couple de braquage selon la revendication 3, dans lequel la barre de torsion (5) est formée d'une seule pièce sur la première pièce constitutive (2).

5. Détecteur de couple de braquage selon l'une des revendications 2 à 4, dans lequel la deuxième pièce constitutive (4) présente également une forme au moins approximative de cloche ou de tasse et entoure la première pièce constitutive (2) en forme de tasse au moins approximativement sur toute son étendue axiale, ses deux prolongements (7) en forme de queues étant disposés dans la zone du bord de sa tasse située du côté du boîtier de direction et sa zone (40) en forme de cloche ou de tasse proche du fond, située du côté de l'arbre de direction, présentant un contour intérieur cylindrique à base circulaire, qui coopère en glissant avec la zone (20) en forme de cloche ou de tasse cylindrique à base circulaire de la première pièce constitutive (2).

6. Détecteur de couple de braquage selon l'une des revendications 3 à 5, dans lequel la barre de torsion (5) vient en prise axialement dans un prolongement axial cylindrique creux (42) disposé au centre dans le fond en forme de cloche ou de tasse (41) de la deuxième pièce constitutive (4) et s'étendant en direction de l'arbre de direction (9) et est accouplée à cet endroit par son extrémité libre de façon dynamométrique.

7. Détecteur de couple de braquage selon l'une des revendications 1 à 6, dans lequel sont disposés des micro-interrupteurs.

8. Détecteur de couple de braquage selon l'une des revendications 1 à 6, dans lequel les capteurs de pression (8) sont constitués sous la forme de résistances électriques de basse impédance fonction des forces.

9. Détecteur de couple de braquage selon la revendication 8, dans lequel les résistances électriques, fonction des forces, sont fixées, de préférence sont collées, sous la forme de feuilles sur des plaques de compression (14), qui sont respectivement disposées entre le premier prolongement (6) et les deux seconds prolongements voisins (7) et qui sont fixées et maintenues sans jeu de leur côté au moyen de vis d'ajustage (15), disposées dans les deuxièmes prolongements (7).

10. Détecteur de couple de braquage selon l'une des revendications 1 à 9, dans lequel on prévoit, pour prélever les signaux produits par les capteurs de pression (8) ou des micro-interrupteurs dans les deux sens de rotation, des ressorts spiraux (11) électriquement conducteurs surmontant respectivement plusieurs révolutions de l'arbre de direction.

11. Détecteur de couple de braquage selon la revendication 10, dans lequel il y a une coquille de boîtier (12), qui peut être reliée, de façon solidaire en rotation, au boîtier de direction (16) pour maintenir les ressorts spiraux (11), qui sont reliés respectivement à une extrémité aux capteurs de pression (8) ou aux micro-interrupteurs et, à l'autre extrémité, dépassent à l'extérieur.

12. Détecteur de couple de braquage selon la revendication 11, dans lequel il y a un fourreau d'étanchéité (13) qui, à une extrémité, assure l'étanchéité et repose, de préférence de façon solidaire en rotation, sur la coquille (12) et, à l'autre extrémité, assure l'étanchéité et repose de préférence en glissant sur une zone périphérique cylindrique à base circulaire de la deuxième pièce constitutive (4).
